# EUROPEAN PATENT APPLICATION

(11) **EP 3 070 699 A1**
(43) Date of publication of application: **21.09.2016**
(21) Application number: 15159774.7
(22) Date of filing: 19.03.2015
(51) Int. Cl.: G08G 1/0962, G06Q 30/02

(54) **DISPLAYING INFORMATION ON A DISPLAY IN A VEHICLE USING A VEHICULAR COMMUNICATION SYSTEM**

(71) Applicant: Siemens Aktiengesellschaft, 80333 München (DE)
(72) Inventor: Ohnheiser, Jiri, 602 00 Brno (CZ)

(57) **Abstract**

Process for displaying information on a display in a vehicle using a vehicular communication system, the process including the following steps
- obtaining the current geographical position of the vehicle,
- obtaining high priority traffic information via the vehicular communication system for the vehicle in that geographical position,
- allowing the displaying of low priority information if traffic information requires a stop of the vehicle and if the vehicle is fully stopped.

## Description

### FIELD OF THE INVENTION

The present invention relates to a process for displaying information on a display in a vehicle using a vehicular communication system, as well as to a respective device for displaying such information.

### STATE OF THE ART

Vehicular communication systems, also named as "C2X" (car to anybody) systems, are a type of network in which vehicles and roadside units are the communicating nodes, providing each other with information, such as safety warnings and traffic information. As a cooperative approach, vehicular communication systems can be more effective in avoiding accidents and traffic congestions than if each vehicle tries to solve these problems individually.

Generally, vehicular networks are considered to contain two types of nodes: vehicles and roadside stations. Both are dedicated short-range communications (DSRC) devices. DSRC often works in 5.9 GHz band and approximate range of 1000 m. The network supports both private data communications, which usually do have lower priority, and public (mainly safety) communications but higher priority is given to public communications. Vehicular communications is usually developed as a part of intelligent transportation systems (ITS). ITS seeks to achieve safety and productivity through intelligent transportation which integrates communication between mobile and fixed nodes. To this end, ITS heavily relies on wired and wireless communications.

### SUMMARY OF THE INVENTION

One object of the present invention is to provide low priority information in a way that safety and traffic flow is not affected.

According to the present invention the process for displaying information on a display in a vehicle using a vehicular communication system thus includes the following steps:
- obtaining the current geographical position of the vehicle,
- obtaining high priority traffic information via the vehicular communication system for the vehicle in that geographical position,
- allowing displaying of low priority information if traffic information requires a stop of the vehicle and if the vehicle is fully stopped.

As a result, low priority information, such as advertisement, maps, business locations, free parking spaces, news related to the current place, etc., will only be displayed when the vehicle is stopped due to respective traffic signs or signals. That is, such low priority information will not be displayed if the vehicle just stops on its own motion or due to traffic congestion. By knowing the current geographical position of the vehicle it is possible to send only such low priority information that is relevant for this place, like advertisement regarding nearby shops or restaurants.

Obtaining the current geographical position of the vehicle is usually done by a GPS unit on board of the vehicle. The GPS unit can be integrated in the vehicle and accessible via an onboard computer. The GPS unit could also be a separate device, such as a handheld device or a mobile phone which is located in or on the vehicle.

The current geographical position of the vehicle could alternatively be obtained from a roadside unit of the vehicular communication system.

One embodiment of the invention is that low priority information is displayed together with high priority traffic information. Thus it is ensured that the driver of the vehicle does not overlook important traffic information when looking at the displayed low priority information.

In order not to further distract the driver of a vehicle when he is allowed to move the vehicle again it can be provided that displaying the low priority information is stopped when traffic information does not require a stop anymore.

According to one embodiment of the invention high priority traffic information could be a red light on a semaphore.

Accordingly, if on a semaphore, e.g. on a traffic light at an intersection, there is a red light, a signal will be sent from the semaphore to the vehicle and the red light will be displayed on the display. Once the car has stopped it will be allowed that low priority information is loaded and displayed on the display. As long as the red light is on, this low priority information is displayed together with the red light. When the red light turns green, the green light will be displayed on the display and the low priority information will be switched off automatically.

The low priority information could be sent to the display via vehicular communication system. So the low priority information has to be fed to the vehicular communication system before. Another possibility is that the low priority information is sent via other wireless communication channels to the display of the vehicle, like a cellular network or a mobile network. Such is a wireless network distributed over land areas called cells, each served by at least one fixed-location transceiver, known as a cell site or base station. When using other wireless communication channels it might be easier to obtain low priority information from any data server outside the vehicular communication system. However, this data has to be in relation to the current position of the vehicle.

One embodiment of the invention provides low priority information to be displayed dependent on time of day. This also helps to display more relevant information, since for the same geographical position the need for information may vary. E.g. during mealtimes restaurant information is useful, in the evening information about leisure places could be more important. Or in the morning a restaurant advertisement could be directed to breakfast, at noon it could be directed to lunch and in the evening to dinner.

Low priority information to be displayed could also be dependent on direction of travel. When e.g. travelling into the city one would prefer to obtain information regarding the city. On the same geographical position when travelling out of the city one would prefer to obtain information regarding places outside the city. Equally, when the vehicle often passes a certain position in both directions, it can be derived that the driver goes to work and drives home and respective low priority information could be displayed.

It is also possible to make the low priority information to be displayed dependent on when and/or how often the vehicle has already been in the current geographical position. So if the vehicle enters a city for the first time the driver needs other information, more general information, than someone who goes into the city every day. So in a vehicle visiting a place for the first time one could display which parking facilities there are, for a frequent visitor the usual parking habits are known and one could display if there is free parking space in his/her favorite car park.

Of course the display in the vehicle may be used for high priority traffic information other than information which requires an immediate stop of the vehicle. So the display could obtain information over the vehicular communication system about traffic congestions or route diversions. All other semaphores (traffic signals), traffic signs or information boards situated on the roadside or overhead and being connected to the vehicular communication system could also be shown on the display in the vehicle, like speed limits or branch-offs.

A possible device for carrying out the process according to the present invention comprises at least a display which is equipped
- to obtain the current geographical position of the vehicle,
- to obtain high priority traffic information via a vehicular communication system for the vehicle in a given geographical position,
- to allow displaying of low priority information if traffic information requires a stop of the vehicle and the vehicle is fully stopped.

## Claims

1. Process for displaying information on a display in a vehicle using a vehicular communication system, the process including the following steps
- obtaining the current geographical position of the vehicle,
- obtaining high priority traffic information via the vehicular communication system for the vehicle in that geographical position,
- allowing the displaying of low priority information if traffic information requires a stop of the vehicle and if the vehicle is fully stopped.

2. Process according to claim 1, **characterized in that** the current geographical position of the vehicle is obtained from a GPS unit on board of the vehicle.

3. Process according to claim 1 or 2, **characterized in that** the current geographical position of the vehicle is obtained from a roadside unit of the vehicular communication system.

4. Process according to one of claims 1 to 3, **characterized in that** low priority information is displayed together with high priority traffic information.

5. Process according to one of claims 1 to 4, **characterized in that** displaying the low priority information is stopped when traffic information does not require a stop anymore.

6. Process according to one of claims 1 to 5, **characterized in that** high priority traffic information is a red light on a semaphore.

7. Process according to one of claims 1 to 6, **characterized in that** low priority information is sent via vehicular communication system.

8. Process according to one of claims 1 to 7, **characterized in that** low priority information to be displayed is dependent on time of day.

9. Process according to one of claims 1 to 8, **characterized in that** low priority information to be displayed is dependent on direction of travel.

10. Process according to one of claims 1 to 9, **characterized in that** low priority information to be displayed is dependent on when and/or how often the vehicle has already been in the current geographical position.

11. Device for displaying information using a vehicular communication system on a display in a vehicle for carrying out a process according to one of claims 1 to 10, comprising at least a display which is equipped
- to obtain the current geographical position of the vehicle,
- to obtain high priority traffic information via a vehicular communication system for the vehicle in a given geographical position,
- to allow displaying of low priority information if traffic information requires a stop of the vehicle and the vehicle is fully stopped.
